# EUROPÄISCHE PATENTANMELDUNG

(11) **EP 4 613 083 A1**
(43) Veröffentlichungstag der Anmeldung: **10.09.2025**
(21) Anmeldenummer: 25160049.0
(22) Anmeldetag: 25.02.2025
(51) Int. Cl.: A01B 69/00, A01B 69/08

(54) **LANDWIRTSCHAFTLICHES ARBEITSSYSTEM ZUM BEARBEITEN DES BODENS UND VERFAHREN**

(30) Priorität: 04.03.2024 DE 102024106108
(71) Anmelder: Dertenkötter, Fabian, 49205 Hasbergen-Gaste (DE); Amazonen-Werke H. Dreyer SE & Co. KG, 49205 Hasbergen (DE)
(72) Erfinder: LENZ, Tino, 04275 Leipzig (DE)

(57) **Zusammenfassung**

Die Erfindung betrifft ein landwirtschaftliches Arbeitssystem (10) zum Bearbeiten des Bodens und/oder zum Pflegen von Nutzpflanzen auf einer landwirtschaftlichen Nutzfläche (N), insbesondere landwirtschaftliches Hacksystem oder Spritzsystem, mit mehreren Arbeitswerkzeugen (14) zum Bearbeiten des Bodens und/oder zum Pflegen von Nutzpflanzen auf der landwirtschaftlichen Nutzfläche (N) und einem Verschieberahmen (16), welcher dazu eingerichtet ist, die Arbeitswerkzeuge (14) zum Korrigieren der Position und/oder der Ausrichtung der Arbeitswerkzeuge (14) zu verfahren.

## Beschreibung

Die Erfindung betrifft ein landwirtschaftliches Arbeitssystem nach dem Oberbegriff des Patentanspruchs 1 und ein Verfahren zum Einstellen nach dem Oberbegriff des Patentanspruchs 13.

Beim Bearbeiten des Bodens und/oder beim Pflegen von Nutzpflanzen auf einer landwirtschaftlichen Nutzfläche wird seitens eines zum Bearbeiten und/oder zum Pflegen eingesetzten landwirtschaftlichen Arbeitssystems während des Bodenbearbeitungs- und/oder Pflanzenpflegevorgangs hohe Präzision gefordert, sodass eine hohe Arbeitsqualität gewährleistet ist und Beschädigungen der Nutzpflanzen auf der landwirtschaftlichen Nutzfläche vermieden werden.

Folglich ist es zwingend notwendig, dass Arbeitswerkzeuge des landwirtschaftlichen Arbeitssystems präzise eingestellt und/oder während des Bodenbearbeitungs- und/oder Pflanzenpflegevorgangs den aktuellen Gegebenheiten entsprechend eingestellt werden, indem die Position und/oder die Ausrichtung der Arbeitswerkzeuge korrigiert wird.

Im Stand der Technik werden die Position und/oder die Ausrichtung der Arbeitswerkzeuge des Arbeitssystems durch Verfahren der Arbeitswerkzeuge mittels eines Verschieberahmens des Arbeitssystems korrigiert. In der Praxis hat sich jedoch herausgestellt, dass die aus dem Stand der Technik bekannte Korrektur der Position und/oder der Ausrichtung der Arbeitswerkzeuge mittels des Verschieberahmens ausschließlich bei Geradeausfahrten des landwirtschaftlichen Arbeitssystems auf der landwirtschaftlichen Nutzfläche ausreichend präzise ist.

Bei Fahrmanövern des landwirtschaftlichen Arbeitssystems, insbesondere bei Kurvenfahrten und/oder bei Wendevorgängen des Arbeitssystems, beispielsweise im Vorgewende der landwirtschaftlichen Nutzfläche, ist die Korrektur der Position und/oder der Ausrichtung der Arbeitswerkzeuge an die durch das Fahrmanöver, beispielsweise die Kurvenfahrt, verursachte Veränderung der Position und/oder Ausrichtung der Arbeitswerkzeuge in Bezug auf die Nutzfläche und die auf der Nutzfläche kultivierten Nutzpflanzen bisher allerdings nur unzureichend gewährleistet, sodass die Arbeitsqualität des Arbeitssystems insbesondere bei Kurvenfahrten und/oder Wendevorgängen leidet und/oder sogar Beschädigungen an Nutzpflanzen durch die unzureichende präzise Korrektur der Position und/oder Ausrichtung der Arbeitswerkzeuge verursacht werden können.

Das Korrigieren der Position und/oder der Ausrichtung der Arbeitswerkzeuge wird im Stand der Technik häufig auf Grundlage der optischen Erfassung von auf der Nutzfläche kultivierten Pflanzenreihen, insbesondere mittels eines kamerabasierten Reihenführungssystems, umgesetzt. Das Erfassen der Pflanzenreihen mittels eines kamerabasierten Reihenführungssystems ist allerdings nur bei linearen Verläufen der Pflanzenreihen und dementsprechenden Geradeausfahrten des Arbeitssystems parallel zu den linear verlaufenden Pflanzenreihen ausreichend präzise. Bei Kurvenverläufen der Pflanzenreihen und/oder bei Kurvenfahrten und/oder Wendevorgängen des Arbeitssystems entlang von kurvenförmig verlaufenden Pflanzenreihen ist die Erfassung mittels des kamerabasierten Reihenführungssystems nicht mehr ausreichend, sodass das Korrigieren der Position und/oder der Ausrichtung der Arbeitswerkzeuge auf Grundlage der mittels der Kameras optisch erfassten Bilddaten so unpräzise ist, dass zumindest die Arbeitsqualität des Arbeitssystems leidet und/oder gar Nutzpflanzen durch unbeabsichtigten Kontakt mit den Arbeitswerkzeugen beschädigt werden können.

Die der Erfindung zugrundeliegende Aufgabe besteht somit darin, die Arbeitsqualität von landwirtschaftlichen Arbeitssystemen durch eine zuverlässigere und präzisere Korrektur der Position und/oder der Ausrichtung der Arbeitswerkzeuge, insbesondere während Kurvenfahrten und/oder Wendevorgängen des Arbeitssystems, zu verbessern.

Die Aufgabe wird gelöst mit einem landwirtschaftlichen Arbeitssystem der eingangs genannten Art, wobei das landwirtschaftliche Arbeitssystem eine elektronische Steuerungseinrichtung umfasst, welche dazu eingerichtet ist, das Verfahren der Arbeitswerkzeuge zum Korrigieren der Position und/oder der Ausrichtung der Arbeitswerkzeuge mittels des Verschieberahmens auf Grundlage einer ermittelten Kurvenbahn eines Bewegungspfads des Arbeitssystems zu steuern.

Durch die elektronische Steuerungseinrichtung, welche dazu eingerichtet ist, das Verfahren der Arbeitswerkzeuge zum Korrigieren der Position und/oder der Ausrichtung der Arbeitswerkzeuge mittels des Verschieberahmens auf Grundlage einer ermittelten Kurvenbahn eines Bewegungspfads des Arbeitssystems zu steuern, wird es ermöglicht, dass die Position und/oder die Ausrichtung der Arbeitswerkzeuge des Arbeitssystems jederzeit mit höchster Präzision korrigiert wird und eine hohe Arbeitsqualität des Arbeitssystems sowie das Vermeiden von Beschädigungen der Nutzpflanzen auf der landwirtschaftlichen Nutzfläche während Bodenbearbeitungs- und/oder Pflanzenpflegevorgängen insbesondere bei Kurvenfahrten und/oder Wendevorgängen des Arbeitssystems entlang einer Kurvenbahn des Bewegungspfads des Arbeitssystems sichergestellt wird. Die aus der verbesserten Korrektur resultierende höhere Arbeitsqualität und Vermeidung von Beschädigungen der Nutzpflanzen trägt in der Folge zu einer Maximierung des Ertrags auf der Nutzfläche bei, indem die verbesserte Korrektur bei landwirtschaftlichen Hacken beispielsweise die mechanische Unkrautbekämpfung und/oder bei landwirtschaftlichen Feldspritzen die Genauigkeit der Applikation der Spritzflüssigkeit auf die Nutzpflanzen verbessert.

Vorzugsweise ist die Steuerungseinrichtung dazu eingerichtet, das Verfahren der Arbeitswerkzeuge auf Grundlage der Bewegungsrichtung und/oder auf Grundlage des Bewegungspfads des Arbeitssystems zu steuern. Das landwirtschaftliche Arbeitssystem kann als getragene oder als gezogene Anbaumaschine ausgebildet sein und/oder eine getragene oder eine gezogene Anbaumaschine umfassen. Das Arbeitssystem kann ein Zug- oder Trägerfahrzeug zum Ziehen und/oder Tragen der Anbaumaschine umfassen, wobei das Zug- oder Trägerfahrzeug und die Anbaumaschine gemeinsam ein als Maschinenverbund ausgebildetes Arbeitssystem bilden können. Das Arbeitssystem kann außerdem als selbstfahrende Arbeitsmaschine ausgebildet sein.

Die Arbeitswerkzeuge sind vorzugsweise an dem Verschieberahmen angeordnet und/oder befestigt, insbesondere beabstandet voneinander und nebeneinander quer zur Fahrtrichtung des Arbeitssystems. Vorzugsweise ist der Verschieberahmen Bestandteil eines Reihenführungssystems des landwirtschaftlichen Arbeitssystems, insbesondere eines kamerabasierten Reihenführungssystems. Der Verschieberahmen kann als Linearverschieberahmen oder als Parallelverschieberahmen ausgebildet sein. Vorzugsweise verfährt der Verschieberahmen die Arbeitswerkzeuge parallel zum Boden der Nutzfläche und/oder relativ zu Pflanzenreihen auf der Nutzfläche, insbesondere quer zur Fahrtrichtung des Arbeitssystems. Durch das Verfahren der Arbeitswerkzeuge wird insbesondere der Abstand zwischen den Pflanzenreihen und den Arbeitswerkzeugen verändert.

Bei einer landwirtschaftlichen Hacke sind die Arbeitswerkzeuge beispielsweise als Hackwerkzeuge, insbesondere als Hackmesser ausgebildet. Bei einer landwirtschaftlichen Feldspritze sind die Arbeitswerkzeuge beispielsweise als Spritzdüsen ausgebildet.

Durch das Korrigieren der Position und/oder der Ausrichtung der Arbeitswerkzeuge mittels des Verschieberahmens soll sichergestellt werden, dass die Arbeitswerkzeuge stets in einer beabsichtigten Position und/oder Ausrichtung angeordnet sind, insbesondere bei Kurvenfahrten und/oder Wendevorgängen des Arbeitssystems, beispielsweise im Vorgewende der Nutzfläche.

Bei einer landwirtschaftlichen Hacke wird auf diese Weise beispielsweise sichergestellt, dass die Arbeitswerkzeuge stets zwischen den Pflanzenreihen in einem beabsichtigten Abstand zu den Nutzpflanzen laufen, sodass keine Pflanzen durch die Arbeitswerkzeuge beschädigt werden. Bei landwirtschaftlichen Feldspritzen werden auf diese Weise vorzugsweise der Spritzdüsen derart mittels des Verschieberahmens verschoben, dass die Spritzflüssigkeit wie beabsichtigt auf die Nutzpflanzen ausgebracht wird und ein gewünschtes Spritzbild erreicht wird.

Statt eines Verschieberahmens kann zum Korrigieren der Position und/oder Ausrichtung der Arbeitswerkzeuge zudem mittels einer Dreipunkthydraulik eines Zug- oder Trägerfahrzeugs des Arbeitssystems, mittels welchem eine Anbaumaschine des Arbeitssystems mit dem Zug- oder Trägerfahrzeug verbunden ist, korrigiert werden. Zum Korrigieren der Position und/oder Ausrichtung der Arbeitswerkzeuge werden vorzugsweise mehrere Arbeitswerkzeuge, insbesondere alle Arbeitswerkzeuge, gleichzeitig und/oder gemeinsam verfahren. Bei Feldspritzen werden beispielsweise mehrere Spritzdüsen in einem Düsenverbund gemeinsam verfahren.

Die Steuerungseinrichtung kann an der Anbaumaschine des Arbeitssystems angeordnet sein. Zudem kann die Steuerungseinrichtung Bestandteil eines Bedienterminals des Arbeitssystems, insbesondere für die Anbaumaschine und/oder das Zug- oder Trägerfahrzeug, sein.

In einer bevorzugten Ausführungsform des landwirtschaftlichen Arbeitssystems umfasst das landwirtschaftliche Arbeitssystem zumindest eine sensorische Erfassungseinrichtung zum Erfassen von die Kurvenbahn des Bewegungspfads des Arbeitssystems betreffenden Sensordaten, wobei die Steuerungseinrichtung vorzugsweise dazu eingerichtet ist, das Verfahren der Arbeitswerkzeuge zum Korrigieren der Position und/oder der Ausrichtung der Arbeitswerkzeuge mittels des Verschieberahmens auf Grundlage der erfassten Sensordaten zu steuern. Es können mehrere Erfassungseinrichtungen, insbesondere mehrere sensorische und/oder mehrere optische Erfassungseinrichtungen an dem Arbeitssystem angeordnet sein. Die zumindest eine Erfassungseinrichtung kann an der Anbaumaschine und/oder an dem Zug- oder Trägerfahrzeug des Arbeitssystems angeordnet sein.

Aus den mittels der Erfassungseinrichtung erfassten Sensordaten ist vorzugsweise die Kurvenbahn des Bewegungspfads des Arbeitssystems ermittelbar. Aus den mittels der Erfassungseinrichtung erfassten Sensordaten ist vorzugsweise die Präsenz von Kurvenfahrten und/oder Wendevorgängen des Arbeitssystems ermittelbar. Aus den mittels der Erfassungseinrichtung erfassten Sensordaten ist vorzugsweise der Kurvenradius von Kurvenfahrten und/oder der Wenderadius von Wendevorgängen des Arbeitssystems ermittelbar. Die mittels der Erfassungseinrichtung erfassten Sensordaten können zudem den aktuellen Maschinenzustand des Arbeitssystems betreffende Zustandsdaten sein, welche insbesondere Informationen zur Fahrgeschwindigkeit des Arbeitssystems, zur aktuellen Ausrichtung und/oder Position der Arbeitswerkzeuge des Arbeitssystems und/oder zum Abstand der Arbeitswerkzeuge zu den Pflanzenreihen umfassen können.

Die zumindest eine Erfassungseinrichtung kann Bestandteil des Reihenführungssystems, beispielsweise zum Erfassen von Nutzpflanzen auf der Nutzfläche insbesondere zum Erfassen des Reihenabstands, der Pflanzenbreite und/oder Pflanzenhöhe der Nutzpflanzen auf der Nutzfläche, sein. Das Reihenführungssystem ist insbesondere als kamerabasiertes Reihenführungssystem ausgebildet, wobei zumindest eine Erfassungseinrichtung als Kamera zum Erfassen von Nutzpflanzen auf der landwirtschaftlichen Nutzfläche betreffenden Nutzpflanzendaten ausgebildet sein kann. Vorzugsweise sind die zumindest eine Erfassungseinrichtung und die Steuerungseinrichtung signalleitend, insbesondere per ISOBUS, miteinander verbunden. Zudem können die Sensordaten auf einem Datenspeicher gespeichert werden, um diese beispielsweise für eine spätere Auswertung der Sensordaten zu sichern.

In einer anderen bevorzugten Ausführungsform des erfindungsgemäßen landwirtschaftlichen Arbeitssystems ist die zumindest eine sensorische Erfassungseinrichtung als Gyroskop und/oder Beschleunigungssensor zum Erfassen von die Lage und/oder die Ausrichtung und/oder die Rotation und/oder die Beschleunigung des Arbeitssystems betreffenden Sensordaten ausgebildet, wobei die Steuerungseinrichtung vorzugsweise dazu eingerichtet ist, das Verfahren der Arbeitswerkzeuge zum Korrigieren der Position und/oder der Ausrichtung der Arbeitswerkzeuge mittels des Verschieberahmens auf Grundlage der Lage und/oder der Ausrichtung und/oder der Rotation und/oder der Beschleunigung des Arbeitssystems zu steuern. Fährt das Arbeitssystem während eines Bearbeitungs- und/oder Pflegevorgangs auf einer Nutzfläche eine Kurve und/oder eine Wende entlang einer Kurvenbahn des Bewegungspfads des Arbeitssystems, so wirken Beschleunigungen, insbesondere Querbeschleunigungen auf das Arbeitssystem und/oder es verändert sich im Zuge der Kurvenfahrt und/oder der Wende die Lage und/oder die Ausrichtung des Arbeitssystems, beispielsweise die Lage und/oder Ausrichtung der Anbaumaschine gegenüber ihres Zug- oder Trägerfahrzeugs und/oder die Lage und/oder Ausrichtung des Arbeitssystems in Bezug auf den Boden der Nutzfläche.

Mittels der zumindest einen Erfassungseinrichtung erfasste Beschleunigungen und/oder Änderungen der Lage und/oder der Ausrichtung des Arbeitssystems können darauf hindeuten, dass das Arbeitssystem eine Kurve fährt und/oder eine Wende durchführt, wobei aus den Sensordaten insbesondere die Kurvenbahn ermittelt werden kann, auf Grundlage derer das Korrigieren der Position und/oder Ausrichtung der Arbeitswerkzeuge mittels des Verschieberahmens vorgenommen, insbesondere durch die Steuerungseinrichtung gesteuert, wird.

Ein Gyroskop ist vorzugsweise dazu eingerichtet, die Lage und/oder die Ausrichtung des Arbeitssystems um mehrere Achsen des Arbeitssystems, insbesondere um die Längsachse und die Querachse des Arbeitssystems, zu erfassen. Zudem ist ein Gyroskop vorzugsweise dazu eingerichtet, die Rotation und/oder die Beschleunigung des Arbeitssystems um mehrere Achsen des Arbeitssystems zu erfassen. Zum Übertragen der erfassten Sensordaten ist die sensorische Erfassungseinrichtung, vorzugsweise die als Gyroskop ausgebildete Erfassungseinrichtung, signalleitend mit der Steuerungseinrichtung verbunden, insbesondere per ISOBUS. Insbesondere wird mittels des Gyroskops eine Rotation des Arbeitssystems um eine Hochachse des Arbeitssystems erfasst, wobei aus der erfassten Rotation um die Hochachse das Vorliegen von Kurvenfahrten und/oder Wendevorgängen und/oder der Kurvenradius und/oder Wenderadius abgeleitet werden kann. Das Gyroskop ist insbesondere dazu eingerichtet, die Längs- und/oder Querbeschleunigung des Arbeitssystems zu erfassen. Zudem kann vorzugsweise auch die Neigung des Arbeitssystems, vorzugsweise um mehrere Achsen des Arbeitssystems, mittels des Gyroskops und/oder mittels einer als Neigungssensor ausgebildeten Erfassungseinrichtung erfasst werden. Aus einer erfassten Neigung kann vorzugsweise ebenfalls das Vorliegen von Kurvenfahrten und/oder Wendevorgängen und/oder der Kurvenradius und/oder der Wenderadius abgeleitet werden.

In einer weiteren bevorzugten Ausführungsform des erfindungsgemäßen landwirtschaftlichen Arbeitssystems ist die zumindest eine sensorische Erfassungseinrichtung als GPS-Sensor zum Erfassen von die aktuelle Geoposition des Arbeitssystems betreffenden Positionsdaten und/oder die aktuelle Befähigung des Arbeitssystems betreffenden Bewegungsdaten ausgebildet, wobei die Steuerungseinrichtung vorzugsweise dazu eingerichtet ist, das Verfahren der Arbeitswerkzeuge zum Korrigieren der Position und/oder der Ausrichtung der Arbeitswerkzeuge mittels des Verschieberahmens auf Grundlage der Geoposition und/oder der Bewegung des Arbeitssystems zu steuern. Vorzugsweise ist der GPS-Sensor als RTK-Sensor ausgebildet und/oder Bestandteil eines RTK-Systems zur präzisen satellitengestützten Positionsbestimmung des Arbeitssystems mit Echtzeitkinematik.

Mittels des GPS-Sensors ist vorzugsweise die Geoposition des Arbeitssystems auf der landwirtschaftlichen Nutzfläche, insbesondere während eines Bearbeitungs- und/oder Pflegevorgangs auf der Nutzfläche, erfassbar. Zudem ist mittels des GPS-Sensors vorzugsweise die Fahrgeschwindigkeit des Arbeitssystems erfassbar. Auf Grundlage der Geoposition und/oder der Fahrgeschwindigkeit des Arbeitssystems ist vorzugsweise ermittelbar, ob das Arbeitssystem aktuell einer Kurvenbahn ihres Bewegungspfads folgt, insbesondere ob das Arbeitssystem aktuell eine Kurvenfahrt und/oder einen Wendevorgang ausführt. Auf Grundlage der Geoposition und/oder der Fahrgeschwindigkeit des Arbeitssystems ist vorzugsweise zudem der Kurvenradius und/oder der Wenderadius einer Kurvenfahrt und/oder eines Wendevorgangs des Arbeitssystems ermittelbar.

In einer Weiterbildung des erfindungsgemäßen landwirtschaftlichen Arbeitssystems ist die zumindest eine sensorische Erfassungseinrichtung Bestandteil einer Kamera zum Erfassen von die Kurvenbahn des Bewegungspfads des Arbeitssystems betreffenden Bilddaten, insbesondere zur optischen Erfassung der Kurvenbahn, wobei die Steuerungseinrichtung vorzugsweise dazu eingerichtet ist, das Verfahren der Arbeitswerkzeuge zum Korrigieren der Position und/oder der Ausrichtung des Arbeitswerkzeuge mittels des Verschieberahmens auf Grundlage der Bilddaten zu steuern.

Alternativ oder zusätzlich zu einem Gyroskop und/oder Beschleunigungssensor und/oder Neigungssensor und/oder GPS-Sensor, insbesondere RTK-Sensor, kann die Kurvenbahn, insbesondere das Vorliegen einer Kurvenfahrt und/oder eines Wendevorgangs und/oder der Kurvenradius und/oder der Wenderadius, optisch erfasst werden, beispielsweise mittels einer oder mehrerer Kameras. Beispielsweise können zum Erfassen der Bilddaten zum Ableiten der Kurvenbahn des Bewegungspfads die Kameras des Reihenführungssystems des Arbeitssystems genutzt werden, welche normalerweise die Pflanzenreihen auf der Nutzfläche erfassen, insbesondere zum Erfassen des Abstands der Arbeitswerkzeuge zu den Pflanzenreihen.

Vorzugsweise wird eine Bildauswertung der Bilddaten ausgeführt, insbesondere zum Bestimmen der Kurvenbahn, beispielsweise des Radius der Kurvenbahn, und/oder des Abstands der Arbeitswerkzeuge zu den Pflanzenreihen, um daraus abzuleiten, ob und inwieweit die Position und/oder die Ausrichtung der Arbeitswerkzeuge korrigiert werden muss. Durch das Verfahren des Verschieberahmens wird vorzugsweise zusätzlich die Position und/oder die Ausrichtung einer oder mehrerer Kameras korrigiert, sodass die eine oder die mehreren Kameras möglichst exakt über den Pflanzenreihen angeordnet sind, um eine möglichst zuverlässige Erkennung der Pflanzenreihen zu ermöglichen.

Es ist außerdem ein erfindungsgemäßes landwirtschaftliches Arbeitssystem bevorzugt, bei welchem die zumindest eine sensorische Erfassungseinrichtung als Lenkwinkelsensor zum Erfassen von dem Lenkwinkel des Arbeitssystems, insbesondere eines Zug- oder Trägerfahrzeugs des Arbeitssystems, betreffenden Sensordaten, wobei die Steuerungseinrichtung vorzugsweise dazu eingerichtet ist, das Verfahren der Arbeitswerkzeuge zum Korrigieren der Position und/oder der Ausrichtung der Arbeitswerkzeuge mittels des Verschieberahmens auf Grundlage des Lenkwinkels des Arbeitssystems zu steuern. Der Lenkwinkelsensor ist vorzugsweise dazu eingerichtet, den Lenkwinkel des Arbeitssystems, insbesondere des Zug- oder Trägerfahrzeugs, zu erfassen.

Aus dem erfassten Lenkwinkel kann beispielsweise der Lenkeinschlag von lenkbaren Rädern des Arbeitssystems abgeleitet werden. Aus dem erfassten Lenkwinkel und/oder dem daraus abgeleiteten Lenkeinschlag ist vorzugsweise eine aus dem Lenkwinkel und/oder dem Lenkeinschlag resultierende Kurvenfahrt und/oder ein resultierender Wendevorgang, insbesondere der Kurvenradius und/oder der Wenderadius, ableitbar. Durch den Lenkwinkel und/oder den daraus resultierenden Lenkeinschlag folgt das Arbeitssystem einer aus dem Lenkwinkel und/oder dem Lenkeinschlag resultierenden Kurvenbahn ihres Bewegungspfads, wobei die Kurvenbahn des Bewegungspfads des Arbeitssystems vorzugsweise aus dem Lenkwinkel und/oder dem Lenkeinschlag ermittelbar ist.

Es ist weiterhin ein erfindungsgemäßes landwirtschaftliches Arbeitssystem vorteilhaft, bei welchem die zumindest eine sensorische Erfassungseinrichtung als Deichselwinkelsensor zum Erfassen von dem Deichselwinkel an einer Deichsel, insbesondere zwischen einem Zugfahrzeug und einer über die Deichsel mit dem Zugfahrzeug verbundenen Anbaumaschine des Arbeitssystems, betreffenden Sensordaten, wobei die Steuerungseinrichtung vorzugsweise dazu eingerichtet ist, das Verfahren der Arbeitswerkzeuge zum Korrigieren der Position und/oder der Ausrichtung der Arbeitswerkzeuge mittels des Verschieberahmens auf Grundlage des Deichselwinkels des Arbeitssystems zu steuern. Vorzugsweise entspricht der Deichselwinkel einem Knickwinkel zwischen der Anbaumaschine und dem Zugfahrzeug des Arbeitssystems.

Der Deichselwinkelsensor kann insbesondere dazu eingerichtet sein, den Winkel zwischen der Längsachse des Zugfahrzeugs und der Längsachse der Anbaumaschine zu erfassen. Ein sich zwischen der Längsachse des Zugfahrzeugs und der Längsachse der Anbaumaschine ergebender Deichselwinkel weist vorzugsweise auf eine Kurvenfahrt und/oder einen Wendevorgang des Arbeitssystems hin, wobei aus dem Deichselwinkel vorzugsweise der Kurvenradius und/oder der Wenderadius ableitbar sind. Durch das Erfassen des Deichselwinkels wird es somit vorzugsweise ermöglicht, die Kurvenbahn des Arbeitssystems entlang ihres Bewegungspfads zu ermitteln.

In einer weiteren bevorzugten Ausführungsform des erfindungsgemäßen landwirtschaftlichen Arbeitssystems ist die elektronische Steuerungseinrichtung dazu eingerichtet, das Verfahren der Arbeitswerkzeuge zum Korrigieren der Position und/oder der Ausrichtung der Arbeitswerkzeuge mittels des Verschieberahmens auf Grundlage von die Nutzfläche betreffenden Nutzflächendaten und/oder die auf der Nutzfläche kultivierten Nutzpflanzen betreffenden Pflanzendaten zu steuern. Vorzugsweise sind die Nutzflächendaten und/oder die Pflanzendaten auf einem Datenspeicher der Steuerungseinrichtung hinterlegt und/oder mittels der Steuerungseinrichtung von einer externen Datenbank und/oder einem externen Server abrufbar.

In einer Weiterbildung des erfindungsgemäßen landwirtschaftlichen Arbeitssystems umfassen die Nutzfläche betreffenden Nutzflächendaten Informationen zum Verlauf von Fahrspuren, insbesondere zum Kurvenverlauf von Kurven der Fahrspuren, für das Arbeitssystem auf der Nutzfläche. Alternativ oder zusätzlich umfassen die auf der Nutzfläche kultivierten Nutzpflanzen betreffenden Pflanzendaten Informationen zum Verlauf von Pflanzenreihen, insbesondere zum Kurvenverlauf von Kurven der Pflanzenreihen, auf der Nutzfläche. Vorzugsweise ist die elektronische Steuerungseinrichtung dazu eingerichtet, das Verfahren der Arbeitswerkzeuge zum Korrigieren der Position und/oder der Ausrichtung der Arbeitswerkzeuge mittels des Verschieberahmens auf Grundlage des Verlaufs der Fahrspuren und/oder des Verlaufs der Pflanzenreihen zu steuern.

Vorzugsweise umfassen die Nutzflächendaten Informationen zu einem Fahrgassensystem und/oder zu Fahrspuren für das Arbeitssystem auf der Nutzfläche. Insbesondere können die Nutzflächendaten Kartendaten der Nutzfläche umfassen oder als Kartendaten der Nutzfläche ausgebildet sein. Vorzugsweise umfassen die Pflanzendaten Informationen zu den Standorten von Nutzpflanzen auf der Nutzfläche, beispielsweise zum Verlauf von Pflanzenreihen, insbesondere zum Kurvenverlauf von Pflanzenreihen auf der Nutzfläche. Die Pflanzendaten können beispielsweise zumindest teilweise während eines Sävorgangs mittels einer Sämaschine aufgezeichnet und abgespeichert worden sein.

Vorzugsweise ist aus den Nutzflächendaten und/oder den Pflanzendaten ein Bewegungspfad des Arbeitssystems ableitbar, insbesondere Kurvenbahnen des Bewegungspfads des Arbeitssystems. Insbesondere kann aus den Nutzflächendaten und/oder den Pflanzendaten ableitbar sein, in welchen Bereichen der Nutzfläche Kurvenfahrten und/oder Wendevorgänge des Arbeitssystems durchgeführt werden und/oder welchen Kurvenradius und/oder Wenderadius die Kurvenfahrten und/oder Wendevorgänge aufweisen. Die Pflanzendaten, insbesondere die Standorte der Nutzpflanzen und/oder der Verlauf von Pflanzenreihen, können alternativ oder zusätzlich von Kameras des Reihenführungssystems des Arbeitssystems erfasst werden.

In einer weiteren bevorzugten Ausführungsform des erfindungsgemäßen landwirtschaftlichen Arbeitssystems umfasst das landwirtschaftliche Arbeitssystem eine elektronische Datenverarbeitungseinrichtung, welche dazu eingerichtet ist, die Kurvenbahn, insbesondere den Kurvenverlauf und/oder den Kurvenradius der Kurvenbahn, zu ermitteln, und/oder Steuerungsvorgaben für die Steuerungseinrichtung zum Steuern des Verfahrens der Arbeitswerkzeuge abzuleiten, wobei die elektronische Datenverarbeitungseinrichtung vorzugsweise dazu eingerichtet ist, die Kurvenbahn, insbesondere den Kurvenverlauf und/oder den Kurvenradius der Kurvenbahn, auf Grundlage der Sensordaten, Positionsdaten, Bewegungsdaten, Bilddaten, Nutzflächendaten und/oder Pflanzendaten zu ermitteln, und/oder die Steuerungsvorgaben auf Grundlage der Sensordaten, Positionsdaten, Bewegungsdaten, Bilddaten, Nutzflächendaten und/oder Pflanzendaten und/oder auf Grundlage der ermittelten Kurvenbahn des Bewegungspfads abzuleiten.

Vorzugsweise setzt sich die Kurvenbahn aus mehreren Kurvenpunkten und/oder mehreren Kurvenabschnitten zusammen. Vorzugsweise ist die Datenverarbeitungseinrichtung dazu eingerichtet, Kurvenpunkte und/oder Kurvenabschnitte zu ermitteln und aus den ermittelten Kurvenpunkten und/oder Kurvenabschnitten die Kurvenbahn zu ermitteln. Die Nutzflächendaten und/oder Pflanzendaten sind vorzugsweise auf der Datenverarbeitungseinrichtung hinterlegt, insbesondere auf einem Datenspeicher der Datenverarbeitungseinrichtung, und/oder von der Datenverarbeitungseinrichtung von einer externen Datenbank und/oder einem externen Server abrufbar. Die von der Datenverarbeitungseinrichtung abgeleiteten Steuerungsvorgaben können weitere Maschinenparameter des Arbeitssystems berücksichtigen, beispielsweise die Fahrgeschwindigkeit des Arbeitssystems, eine aktuelle Ausrichtung und/oder Position der Arbeitswerkzeuge und/oder den Abstand der Arbeitswerkzeuge zu den Pflanzenreihen auf der Nutzfläche.

Vorzugsweise ist die Datenverarbeitungseinrichtung dazu eingerichtet, die Kurvenbahn und/oder die Steuerungsvorgaben durch Anwendung einer Berechnungsroutine zu ermitteln, insbesondere zu berechnen. Vorzugsweise berücksichtigt die Datenverarbeitungseinrichtung zum Ermitteln der Kurvenbahn und/oder zum Ableiten der Steuerungsvorgaben die Geometrie des Arbeitssystems, insbesondere die Geometrie der Anbaumaschine und/oder des Zug- oder Trägerfahrzeugs. Die Geometrie des Arbeitssystems ist vorzugsweise mittels der Datenverarbeitungseinrichtung abrufbar, beispielsweise von einer externen Datenbank und/oder einem externen Server, und/oder auf der Datenverarbeitungseinrichtung, insbesondere dem Datenspeicher der Datenverarbeitungseinrichtung, hinterlegt.

Es ist außerdem ein erfindungsgemäßes landwirtschaftliches Arbeitssystem vorteilhaft, bei welchem die elektronische Datenverarbeitungseinrichtung dazu eingerichtet ist, die Geoposition, insbesondere die mittels des GPS-Sensors erfasste Geoposition, des Arbeitssystems mit den die Nutzfläche betreffenden Nutzflächendaten, insbesondere dem Verlauf der Fahrspuren für das Arbeitssystem auf der Nutzfläche, und/oder den die auf der Nutzfläche kultivierten Nutzpflanzen betreffenden Pflanzendaten, insbesondere dem Verlauf der Pflanzenreihen auf der Nutzfläche zu vergleichen, wobei die Datenverarbeitungseinrichtung vorzugsweise dazu eingerichtet ist, die Steuerungsvorgaben für die Steuerungseinrichtung auf Grundlage des Vergleichs abzuleiten und/oder wobei die Steuerungseinrichtung vorzugsweise dazu eingerichtet ist, das Verfahren der Arbeitswerkzeuge zum Korrigieren der Position und/oder der Ausrichtung der Arbeitswerkzeuge mittels des Verschieberahmens auf Grundlage des Vergleichs zu steuern.

Vorzugsweise ist durch den Vergleich der Geoposition des Arbeitssystems mit den Nutzflächendaten und/oder den Pflanzendaten mittels der Datenverarbeitungseinrichtung ableitbar, zu welchen Zeitpunkten das Arbeitssystem während eines Bearbeitungs- und/oder Pflegevorgangs Kurven und/oder Wenden ausführt, wobei insbesondere ableitbar ist, welchen Radius die Kurven und/oder die Wenden aufweisen, sodass ermittelbar ist, wann und ob und inwieweit die Arbeitswerkzeuge korrigiert werden müssen. Vorzugsweise ist die Datenverarbeitungseinrichtung dazu eingerichtet, Kartendaten der Nutzfläche, insbesondere Fahrspuren auf der Nutzfläche, und/oder Pflanzenreihen auf der Nutzfläche mit der Geoposition des Arbeitssystems zu vergleichen.

Ergibt der Vergleich der Geoposition des Arbeitssystems mit den Fahrspuren und/oder den Pflanzenreihen auf der Nutzfläche, dass das Arbeitssystem unmittelbar vor der Einfahrt in eine Kurve oder in eine Wende steht oder aktuell bereits eine Kurve oder Wende fährt, wird das Korrigieren der Arbeitswerkzeuge vorzugsweise eingeleitet und auf Grundlage des Radius der Kurve und/oder Wende gesteuert. Die Datenverarbeitungseinrichtung ist folglich vorzugsweise dazu eingerichtet, die Steuerungsvorgaben in Abhängigkeit einer aktuellen und/oder bevorstehenden Kurvenfahrt des Arbeitssystems, insbesondere in Abhängigkeit des Kurvenradius einer aktuellen und/oder bevorstehenden Kurvenfahrt und/oder eines aktuellen und/oder bevorstehenden Wenderadius des Arbeitssystems, insbesondere in Abhängigkeit des Wenderadius eines aktuellen und/oder bevorstehenden Wendevorgangs, abzuleiten.

In einer weiteren bevorzugten Ausführungsform des erfindungsgemäßen landwirtschaftlichen Arbeitssystems betrifft das Korrigieren der Position und/oder der Ausrichtung der Arbeitswerkzeuge das Verändern der Position und/oder der Ausrichtung der Arbeitswerkzeuge in Bezug auf Nutzpflanzen auf der landwirtschaftlichen Arbeitsfläche, insbesondere das Verändern des Abstands der Arbeitswerkzeuge zu Pflanzenreihen auf der landwirtschaftlichen Nutzfläche. Durch das Korrigieren wird sichergestellt, dass die Arbeitswerkzeuge stets in einem beabsichtigen Abstand zu den Nutzpflanzen auf der Nutzfläche eingestellt sind, auch dann, wenn das Arbeitssystem Kurvenfahrten und/oder Wendevorgänge ausführt.

Bei Nutzpflanzen, welche in Reihen kultiviert werden, sollen bei landwirtschaftlichen Hacken beispielsweise die Hackmesser stets möglichst mittig zwischen den Pflanzenreihen laufen, um die Pflanzen nicht unabsichtlich zu beschädigen. Bei landwirtschaftlichen Feldspritzen sollen die Spritzdüsen beispielsweise möglichst exakt über den Pflanzenreihen laufen, um die Spritzflüssigkeit möglichst exakt auf die Nutzpflanzen applizieren zu können. Außerdem sollen Kameras des Reihenführungssystems des Arbeitssystems in einem beabsichtigten Abstand zu den Pflanzenreihen angeordnet sein, damit die Erkennung der Pflanzen und/oder das Erfassen der Position und/oder Ausrichtung der Arbeitswerkzeuge möglichst präzise ist.

Bei Kurvenfahrten und/oder Wendevorgängen des Arbeitssystems, während das Arbeitssystem einer Kurvenbahn ihres Bewegungspfads folgt, kann es dazu kommen, dass die Position und/oder die Ausrichtung der Arbeitswerkzeuge nicht mehr zu dem Verlauf der Pflanzenreihen passt und die Arbeitswerkzeuge, beispielsweise die Hackmesser, Nutzpflanzen beschädigen oder Spritzdüsen die Spritzflüssigkeit nicht mehr präzise auf die Nutzpflanzen applizieren. Bei Fahrten des Arbeitssystems auf Kurvenbahnen des Bewegungspfads des Arbeitssystems reicht das kamerabasierte Reihenführungssystem allein häufig nicht für eine präzise Korrektur der Position und/oder Ausrichtung der Arbeitswerkzeuge aus, da die Kameras die Kurvenbahn zu spät oder gar nicht erkennen und somit keine Korrektur oder eine zu späte Korrektur vorgenommen wird.

Die der Erfindung zugrundeliegende Aufgabe wird weiterhin durch ein Verfahren zum Einstellen der eingangs genannten Art gelöst, wobei im Rahmen des Verfahrens das Verfahren der Arbeitswerkzeuge zum Korrigieren der Position und/oder der Ausrichtung der Arbeitswerkzeuge mittels des Verschieberahmens auf Grundlage einer ermittelten Kurvenbahn eines Bewegungspfads des Arbeitssystems mittels einer elektronischen Steuerungseinrichtung gesteuert wird.

Vorzugsweise wird im Rahmen des erfindungsgemäßen Verfahrens ein landwirtschaftliches Arbeitssystem nach einer der vorstehenden Ausführungsformen eingestellt. Hinsichtlich der Vorteile und Modifikationen des erfindungsgemäßen Verfahrens wird somit auf die Vorteile und Modifikationen des erfindungsgemäßen landwirtschaftlichen Arbeitssystems verwiesen.

Nachfolgend werden bevorzugte Ausführungsformen der Erfindung unter Bezugnahme auf die beiliegenden Zeichnungen näher erläutert und beschrieben. Dabei zeigen:
- Fig. 1: ein erfindungsgemäßes landwirtschaftliches Arbeitssystem während eines Bearbeitungs- und/oder Pflegevorgangs auf einer landwirtschaftlichen Nutzfläche in einer perspektivischen Ansicht;
- Fig. 2: ein erfindungsgemäßes landwirtschaftliches Arbeitssystem während einer Kurvenfahrt ohne korrigierte Position und/oder Ausrichtung von Arbeitswerkzeugen des Arbeitssystems in einer schematischen Darstellung von oben; und
- Fig. 3: das Arbeitssystem aus Fig. 2 mit korrigierter Position und/oder Ausrichtung der Arbeitswerkzeuge in einer schematischen Darstellung von oben.

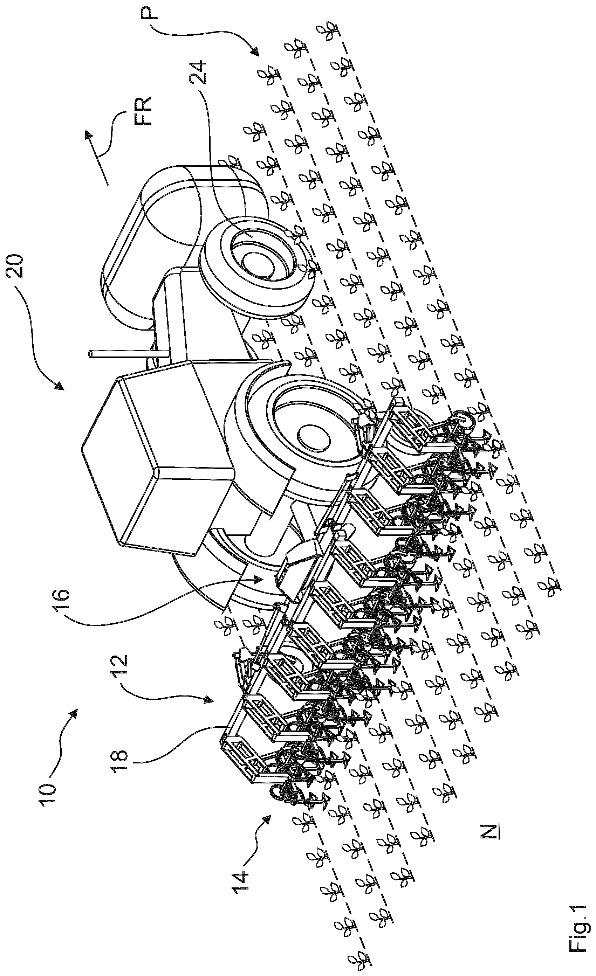

Die Fig. 1 zeigt ein erfindungsgemäßes landwirtschaftliches Arbeitssystem 10 während eines Bodenbearbeitungs- und/oder Pflanzenpflegevorgangs auf einer landwirtschaftlichen Nutzfläche N. Das landwirtschaftliche Arbeitssystem 10 umfasst in der abgebildeten Ausführungsform ein Trägerfahrzeug 20 und eine landwirtschaftliche Anbaumaschine 12, wobei die landwirtschaftliche Anbaumaschine 12 als getragene landwirtschaftliche Hacke ausgebildet ist, welche von dem Trägerfahrzeug 20, welches als Schlepper ausgebildet ist, getragen wird. In anderen Ausführungsformen des erfindungsgemäßen landwirtschaftlichen Arbeitssystems 10 kann das Arbeitssystem 10 auch ausschließlich eine landwirtschaftliche Anbaumaschine 12 umfassen. Zudem kann das landwirtschaftliche Arbeitssystem 10 ein Zugfahrzeug und eine gezogene Anbaumaschine umfassen oder als selbstfahrende landwirtschaftliche Arbeitsmaschine ausgebildet sein. Die landwirtschaftliche Anbaumaschine 12 kann ebenfalls beispielsweise als landwirtschaftliche Feldspritze ausgebildet sein.

Das landwirtschaftliche Arbeitssystem 10 fährt während des Bodenbearbeitungs- und/oder Pflanzenpflegevorgangs in der Fahrtrichtung FR über die landwirtschaftliche Nutzfläche N, wobei das Arbeitssystem 10 während des Bodenbearbeitungs- und/oder Pflanzenpflegevorgangs in der Fahrtrichtung FR parallel zu von auf der Nutzfläche N kultivierten Nutzpflanzen gebildeten Pflanzenreihen P fährt. Zum Vorgeben der Fahrtrichtung FR für das Arbeitssystem 10, insbesondere zum Vorgeben der Fahrtrichtung für die landwirtschaftliche Anbaumaschine 12, umfasst das Trägerfahrzeug 20 lenkbare Räder 24, mittels welcher durch Einstellen eines beabsichtigten Lenkwinkels die Fahrtrichtung FR derart eingestellt werden kann, dass das Arbeitssystem 10 stets parallel zu den Pflanzenreihen P fährt.

Die landwirtschaftliche Anbaumaschine 12 des Iandwirtschaftlichen Arbeitssystems 10 umfasst mehrere Arbeitswerkzeuge 14. Die Arbeitswerkzeuge 14 sind nebeneinander und beabstandet voneinander an einem senkrecht zur Fahrtrichtung FR und parallel zur Nutzfläche N angeordneten Trägerbalken 18 der Anbaumaschine 12 angeordnet. Insbesondere sind die Arbeitswerkzeuge 14 derart an dem Trägerbalken 18 beabstandet und nebeneinander angeordnet, dass die Arbeitswerkzeuge 14 jeweils so zwischen den Pflanzenreihen P angeordnet sind, dass die Arbeitswerkzeuge 14 die Nutzpflanzen in den Pflanzenreihen P nicht kontaktieren und somit nicht beschädigen. In der dargestellten Ausführungsform sind die Arbeitswerkzeuge 14 als Hackwerkzeuge ausgebildet, mittels welcher der Boden der Nutzfläche N zwischen den Pflanzenreihen P insbesondere zur Unkrautbekämpfung bearbeitet wird.

Um sicherzustellen, dass die Arbeitswerkzeuge 14 stets in einer beabsichtigten Position und/oder Ausrichtung angeordnet sind, sodass die Arbeitswerkzeuge 14 insbesondere stets zwischen den Pflanzenreihen P laufen, um die Nutzpflanzen nicht zu beschädigen, umfasst das landwirtschaftliche Arbeitssystem 10 einen Verschieberahmen 16. Mittels des Verschieberahmens 16, an welchem der Trägerbalken 18 und somit die an dem Trägerbalken 18 angeordneten Arbeitswerkzeuge 14 angeordnet sind, können die Arbeitswerkzeuge 14 gemeinsam parallel zur Nutzfläche N und senkrecht zur Längserstreckungsrichtung des Arbeitssystems 10 verfahren werden. Durch das Verfahren der Arbeitswerkzeuge 14 mittels des Verschieberahmens 16 kann die Position und/oder Ausrichtung der Arbeitswerkzeuge 14 während eines Bodenbearbeitungs- und/oder Pflanzenpflegevorgangs mittels des Arbeitssystems 10 korrigiert werden, sodass die Arbeitswerkzeuge 14 stets in einer beabsichtigten Position und/oder Ausrichtung, insbesondere in Bezug auf die Pflanzenreihen P, angeordnet sind. Auf diese Weise kann stets eine hohe Arbeitsqualität, insbesondere eine gleichbleibend hohe Arbeitsqualität, sichergestellt und Beschädigungen der Nutzpflanzen verhindert werden.

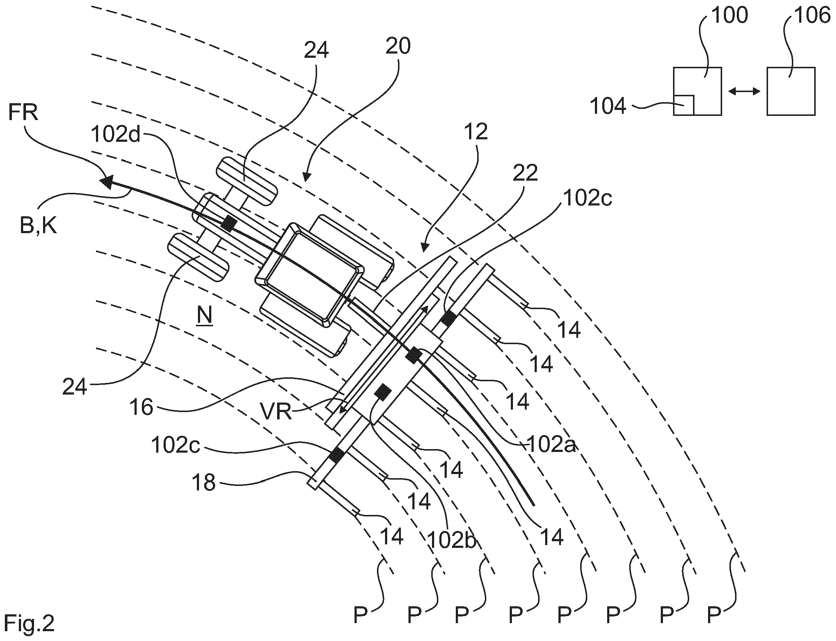

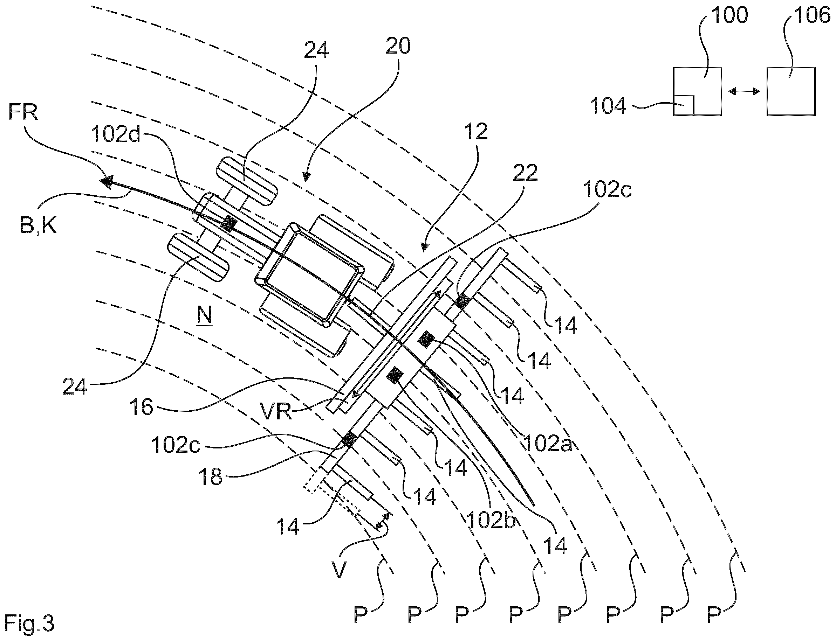

Die Fig. 2 und 3 zeigen ein erfindungsgemäßes landwirtschaftliches Arbeitssystem 10, umfassend eine als getragene Hacke ausgebildete landwirtschaftliche Anbaumaschine 12 und ein als Schlepper ausgebildetes Trägerfahrzeug 20, welches während eines Bodenbearbeitungs- und/oder Pflanzenpflegevorgangs auf einer landwirtschaftlichen Nutzfläche N eine Kurvenfahrt durchführt. Das Arbeitssystem 10 kann beispielsweise dann während eines Bodenbearbeitungs- und/oder Pflanzenpflegevorgangs auf einer landwirtschaftlichen Nutzfläche N eine Kurvenfahrt durchführen, wenn die auf der landwirtschaftlichen Nutzfläche N kultivierten Nutzpflanzen in zumindest abschnittsweise kurvenförmigen Pflanzenreihen P angepflanzt sind und/oder wenn das Arbeitssystem 10 Wendevorgänge, beispielsweise im Vorgewende der Nutzfläche N, ausführen muss.

In den Fig. 2 und 3 ist eine Situation dargestellt, in welcher das Arbeitssystem 10 kurvenförmig verlaufenden Pflanzenreihen P folgt. Um dem Kurvenverlauf der Pflanzenreihen P zu folgen, fährt das landwirtschaftliche Arbeitssystem 10 in seiner Fahrtrichtung FR einem kurvenförmig verlaufenden Bewegungspfad B, welcher als Kurvenbahn K ausgebildet ist. Die Kurvenbahn K des Bewegungspfads B des landwirtschaftlichen Arbeitssystems 10 verläuft dabei parallel zu dem Kurvenverlauf der Pflanzenreihen P. Folglich entspricht der Kurvenradius der Kurvenbahn K des Bewegungspfads B des Arbeitssystems 10 dem Kurvenradius der Kurvenverläufe der Pflanzenreihen P, sodass das Arbeitssystem 10 dem Kurvenverlauf der Pflanzenreihen P folgt.

In der dargestellten Ausführungsform des landwirtschaftlichen Arbeitssystems 10 umfasst das Arbeitssystem 10 ein Trägerfahrzeug 20 sowie eine Anbaumaschine 12, wobei das Trägerfahrzeug 20 mittels einer Tragevorrichtung 22 mit der Anbaumaschine 12 verbunden ist, sodass das Trägerfahrzeug 20 die Anbaumaschine 12 mittels der Tragevorrichtung 22 trägt. Folglich gibt das Trägerfahrzeug 20 die Fahrtrichtung FR für die Anbaumaschine 12 derart vor, dass das Trägerfahrzeug 20 und die Anbaumaschine 12 gemeinsam der Kurvenbahn K des Bewegungspfads B folgen. Es sind allerdings, wie bereits beschrieben, andere Ausführungsformen des landwirtschaftlichen Arbeitssystems 10 denkbar, beispielsweise ein Arbeitssystem, welches ausschließlich eine Anbaumaschine umfasst, ein Arbeitssystem, welches als selbstfahrende Arbeitsmaschine ausgebildet ist, oder ein Arbeitssystem, welches ein Zugfahrzeug und eine gezogene Anbaumaschine umfasst.

Die in den Fig. 2 und 3 dargestellte Ausführungsform der landwirtschaftlichen Anbaumaschine 12 ist als getragene landwirtschaftliche Hacke ausgebildet und umfasst mehrere als Hackwerkzeuge ausgebildete Arbeitswerkzeuge 14, welche nebeneinander und beabstandet voneinander an einem sich quer zur Längserstreckungsrichtung des Arbeitssystems 10 erstreckenden Trägerbalken 18 parallel zum Boden der Nutzfläche N angeordnet sind. Bei landwirtschaftlichen Arbeitssystemen 10, welche als landwirtschaftliche Hacke ausgebildet sind oder eine landwirtschaftliche Hacke umfassen, ist es beabsichtigt, dass die als Hackwerkzeuge ausgebildeten Arbeitswerkzeuge 14 während eines Bodenbearbeitungs- und/oder Pflanzenpflegevorgangs zwischen den Pflanzenreihen P laufen, um ausschließlich den Boden der Nutzfläche N zwischen den Pflanzenreihen P zu bearbeiten, insbesondere zur mechanischen Unkrautbekämpfung, ohne dabei die Nutzpflanzen in den Pflanzenreihen P zu berühren oder diese gar zu beschädigen.

Bei den aus dem Stand der Technik bekannten landwirtschaftlichen Arbeitssystemen kommt es insbesondere bei Kurvenfahrten und/oder Wendevorgängen allerdings häufig vor, dass die Arbeitswerkzeuge 14 während einer Kurvenfahrt und/oder eines Wendevorgangs des Arbeitssystems 10 entlang einer Kurvenbahn K des Bewegungspfads B des Arbeitssystems 10 nicht mehr wie beabsichtigt zwischen den Pflanzenreihen P laufen, sondern abweichend von einer beabsichtigten Position und/oder Ausrichtung, insbesondere in Bezug auf die Pflanzenreihen P, die Pflanzenreihen P kontaktieren und somit die Nutzpflanzen in den Pflanzenreihen P gegebenenfalls beschädigen oder zumindest für eine herabgesetzte Arbeitsqualität des Arbeitssystems 10 sorgen.

Die Fig. 2 zeigt eine solche Situation, in welcher die Arbeitswerkzeuge 14 bei einer Kurvenfahrt des Arbeitssystems 10 entlang einer Kurvenbahn K des Bewegungspfads B des Arbeitssystems 10 durch eine unzureichende Korrektur der Position und/oder Ausrichtung der Arbeitswerkzeuge 14 in den Pflanzenreihen P und nicht, wie beabsichtigt, zwischen den Pflanzenreihen P laufen.

Um die in der Fig. 2 dargestellte Situation mit einer unzureichenden Korrektur der Position und/oder Ausrichtung der Arbeitswerkzeuge 14 zu vermeiden und folglich die Arbeitsqualität des Arbeitssystems 10 zu erhöhen sowie Beschädigungen der Nutzpflanzen zu verhindern, umfasst das erfindungsgemäße landwirtschaftliche Arbeitssystem 10 eine Steuerungseinrichtung 100, welche dazu eingerichtet ist, einen Verschieberahmen 16, an welchem die Arbeitswerkzeuge 14 über den Trägerbalken 18 angeordnet sind, derart auf Grundlage der Kurvenbahn K des Bewegungspfads B des Arbeitssystems 10 zu steuern, dass die Position und/oder die Ausrichtung der Arbeitswerkzeuge 14 durch Verfahren der Arbeitswerkzeuge 14 mittels des Verschieberahmens 16 derart korrigiert wird. Auf diese Weise wird erreicht, dass die Arbeitswerkzeuge 14, wie in der Fig. 3 dargestellt, auch bei Kurvenfahrten und/oder Wendevorgängen des Arbeitssystems 10 entlang von Kurvenbahnen K des Bewegungspfads B des Arbeitssystems 10 zum Vermeiden von Beschädigungen der Nutzpflanzen und zum Aufrechterhalten einer hohen Arbeitsqualität stets zwischen den Pflanzenreihen P laufen.

Ist die landwirtschaftliche Anbaumaschine 12 in einer anderen Ausführungsform beispielsweise als landwirtschaftliche Feldspritze ausgebildet, können die Arbeitswerkzeuge 14 insbesondere als Spritzdüsen ausgebildet sein, bei welchen es beabsichtigt ist, dass diese, nicht wie Hackwerkzeuge zwischen den Pflanzenreihen P, sondern zum Applizieren von Spritzflüssigkeit auf die Nutzpflanzen möglichst direkt über den Pflanzenreihen P angeordnet sind. Außerdem ist es in anderen Ausführungsformen des Arbeitssystems 10 denkbar, dass die Position und/oder Ausrichtung der Arbeitswerkzeuge 14 statt mittels eines Verschieberahmens 16 über die Tragevorrichtung 22 des Trägerfahrzeugs 20 korrigiert werden, wobei die Tragevorrichtung 22 beispielsweise als Dreipunkthydraulik des als Schlepper ausgebildeten Trägerfahrzeugs ausgebildet ist.

Die Steuerungseinrichtung 100 ist insbesondere dazu eingerichtet, das Verfahren der Arbeitswerkzeuge 14 zum Korrigieren der Position und/oder der Ausrichtung der Arbeitswerkzeuge 14 mittels des Verschieberahmens auf Grundlage einer ermittelten Kurvenbahn K des Bewegungspfads B des Arbeitssystems 10 zu steuern. Um die Kurvenbahn K des Bewegungspfads B des Arbeitssystems 10 zu ermitteln, umfasst die dargestellte Ausführungsform des Arbeitssystems 10 mehrere Erfassungseinrichtungen 102a bis 102d. Zusätzlich zu den Erfassungseinrichtungen 102a bis 102d umfasst die dargestellte Ausführungsform des Arbeitssystems 10 außerdem eine Datenverarbeitungseinrichtung 106, mittels welcher alternativ oder zusätzlich die Kurvenbahn K ermittelbar ist und/oder mittels welcher von den Erfassungseinrichtungen 102a bis 102d erfasste Sensordaten ausgewertet und/oder Steuerungsvorgaben für die Steuerungseinrichtung 100 abgeleitet werden können.

Zudem umfasst das landwirtschaftliche Arbeitssystem 10 einen Datenspeicher 104, welcher beispielsweise Bestandteil der Steuerungseinrichtung 100 sein kann. Der Datenspeicher 104 kann zudem Bestandteil der Datenverarbeitungseinrichtung 106 sein. In anderen Ausführungsformen des Arbeitssystems 10 kann auch kein Datenspeicher 104 am Arbeitssystem 10 angeordnet sein, wobei die Steuerungseinrichtung 100 und/oder die Datenverarbeitungseinrichtung 106 dann dazu eingerichtet sein können, auf einen externen Datenspeicher, beispielsweise einen Server oder eine Datenbank, zuzugreifen. Die Steuerungseinrichtung 100, die Datenverarbeitungseinrichtung 106 und/oder der Datenspeicher 104 können an dem Trägerfahrzeug 20 und/oder an der Anbaumaschine 12 angeordnet sein, wobei die Steuerungseinrichtung 100, der Datenspeicher 104 und/oder die Datenverarbeitungseinrichtung 106 insbesondere Bestandteil eines Bedienterminals für das Arbeitssystem 10, insbesondere für die Anbaumaschine 12, sein können.

Zum Ermitteln der Kurvenbahn K des Bewegungspfads B des Arbeitssystems 10 umfasst die dargestellte Ausführungsform des Arbeitssystems 10 mehrere sensorische Erfassungseinrichtungen 102a bis 102d, wobei die Erfassungseinrichtung 102a insbesondere als Gyroskop, die Erfassungseinrichtung 102b insbesondere als GPS-Sensor und die Erfassungseinrichtung 102d insbesondere als Lenkwinkelsensor ausgebildet ist. Die Erfassungseinrichtungen 102c sind zudem insbesondere als Kameras ausgebildet.

In anderen Ausführungsformen des landwirtschaftlichen Arbeitssystems 10 können auch eine oder mehrere der Erfassungseinrichtungen 102a bis 102d nicht vorhanden sein. Zudem können in anderen Ausführungsformen des Arbeitssystems 10 weitere, in dieser Darstellung nicht abgebildete Erfassungseinrichtungen, beispielsweise ein zusätzlicher Neigungssensor und/oder Beschleunigungssensor, vorhanden sein. Es ist beispielsweise denkbar, dass das Ermitteln der Kurvenbahn K des Bewegungspfads B des Arbeitssystems 10 auch ausschließlich mit einem Gyroskop und/oder ausschließlich mit einem GPS-Sensor ausgeführt werden kann.

Wird mittels einer oder mehrerer der Erfassungseinrichtungen 102a bis 102d erfasst, dass das Arbeitssystem 10 aktuell eine Kurvenfahrt und/oder eine Wende entlang einer Kurvenbahn K des Bewegungspfads B des Arbeitssystems 10 ausführt, steuert die Steuerungseinrichtung 100 auf Grundlage der erfassten Kurvenbahn K das Verfahren der Arbeitswerkzeuge 14 mittels des Verschieberahmens 16 derart, dass die Position und/oder die Ausrichtung der Arbeitswerkzeuge 14, insbesondere in Bezug auf die Pflanzenreihen P, auf Grundlage der ermittelten Kurvenbahn K korrigiert wird. Dazu werden die mittels einer oder mehrerer der Erfassungseinrichtungen 102a bis 102d erfassten und die Kurvenbahn K betreffenden Sensordaten beispielsweise direkt zum Steuern des Verschieberahmens 16 an die Steuerungseinrichtung 100 übertragen, wobei die Sensordaten alternativ oder zusätzlich zunächst zum Auswerten und/oder zum Ableiten von Steuerungsvorgaben für die Steuerungseinrichtung 100 an die Datenverarbeitungseinrichtung 106 übermittelt werden können. Die Erfassungseinrichtungen 102a bis 102d, die Steuerungseinrichtung 100, die Datenverarbeitungseinrichtung 106 sowie der Datenspeicher 104 sind dazu signalleitend miteinander verbunden, insbesondere per ISOBUS.

Erfasst beispielsweise die als Gyroskop ausgebildete Erfassungseinrichtung 102a, dass das Arbeitssystem 10, insbesondere die Anbaumaschine 12, eine Rotation, insbesondere um eine Hochachse des Arbeitssystems 10, insbesondere der Anbaumaschine 12, ausführt und/oder dass Querbeschleunigungen auf das Arbeitssystem 10, insbesondere auf die Anbaumaschine 12, wirken, können aus der erfassten Rotation und/oder den erfassten Querbeschleunigungen das Vorliegen einer Kurvenfahrt und/oder eines Wendevorgangs abgeleitet und/oder die Kurvenbahn K des Bewegungspfads B des Arbeitssystems 10, beispielsweise der Wenderadius und/oder der Kurvenradius, aus den Sensordaten abgeleitet werden. Aus der ermittelten Kurvenbahn K können beispielsweise mittels der Datenverarbeitungseinrichtung 106 anschließend Steuerungsvorgaben für die Steuerungseinrichtung 100 abgeleitet werden, welche vorgeben, um welchen Verfahrweg V in der Verfahrrichtung VR der Verschieberahmen 16 zum Verfahren der Arbeitswerkzeuge 14 verfahren werden muss, um die Position und/oder die Ausrichtung der Arbeitswerkzeuge 14 basierend auf der ermittelten Kurvenbahn K derart zu korrigieren, dass während einer Kurvenfahrt und/oder während eines Wendevorgangs entlang der Kurvenbahn K des Bewegungspfads B ausschließlich der Boden der Nutzfläche N zwischen den Pflanzenreihen P durch die Arbeitswerkzeuge 14 ohne Beschädigung der Nutzpflanzen bearbeitet und/oder gepflegt wird.

Der Verschieberahmen 16 kann alternativ oder zusätzlich auf Grundlage einer mittels eines als GPS-Sensor ausgebildeten Erfassungseinrichtung 102b ermittelten Kurvenbahn K des Bewegungspfads B gesteuert werden. Mittels des GPS-Sensors kann während eines Bodenbearbeitungs- und/oder Pflanzenpflegevorgangs des Arbeitssystems 10 auf der Nutzfläche N beispielsweise permanent oder in beabsichtigten Zeitabständen die Geoposition des Arbeitssystems 10 auf der Nutzfläche N bestimmt werden. Die Geoposition des Arbeitssystems 10, welche mittels der als GPS-Sensor ausgebildeten Erfassungseinrichtung 102b bestimmt wird, kann anschließend, insbesondere mittels der Datenverarbeitungseinrichtung 106, mit Nutzflächendaten und/oder Pflanzendaten verglichen werden, welche beispielsweise auf dem Datenspeicher 104 hinterlegt sind.

Die Nutzflächendaten können beispielsweise Kartendaten sein und/oder Kartendaten umfassen, welche den beabsichtigten Bewegungspfad B des Arbeitssystems 10, insbesondere Fahrspuren für das Arbeitssystem 10 auf der Nutzfläche N, betreffen. Die Pflanzendaten können beispielsweise die Standorte von Nutzpflanzen auf der Nutzfläche N, insbesondere den Verlauf von Pflanzenreihen P auf der Nutzfläche N, betreffen.

Ergibt der Vergleich der Geoposition des Arbeitssystems 10 mit Nutzflächendaten der Nutzfläche N, dass sich das Arbeitssystem 10 aktuell in einem Bereich der Nutzfläche N bewegt, in welchem eine Kurvenbahn K des Bewegungspfads B vorliegt, da die Fahrspuren für das Arbeitssystem 10 in den Kartendaten in dem jeweiligen Bereich Kurven beinhalten, kann die Datenverarbeitungseinrichtung 106 basierend auf den hinterlegten Nutzflächendaten und der ermittelten Geoposition Steuerungsvorgaben zum Steuern des Verschieberahmens ableiten, auf Grundlage derer die Steuerungseinrichtung 100 die Position und/oder die Ausrichtung der Arbeitswerkzeuge 14 durch Verfahren des Verschieberahmens 16 um einen Verfahrweg V in der Verfahrrichtung VR steuert.

Ergibt ein Vergleich der ermittelten Geoposition des Arbeitssystems 10 mit hinterlegten Pflanzendaten, dass die Pflanzenreihen P in dem Bereich der Nutzfläche N, in welchem sich das Arbeitssystem 10 aktuell bewegt, kurvenförmig verlaufen, kann die Datenverarbeitungseinrichtung 106 auf Grundlage des Kurvenverlaufs der Pflanzenreihen P die Kurvenbahn K des Bewegungspfads B des Arbeitssystems 10 ermitteln, wobei die Kurvenbahn K des Bewegungspfads B des Arbeitssystems 10 im Wesentlichen dem Kurvenverlauf der Pflanzenreihen P entsprechen kann. Auf Grundlage der aus dem Kurvenverlauf der Pflanzenreihen P ermittelten Kurvenbahn K können anschließend ebenfalls Steuerungsvorgaben für die Steuerungseinrichtung 100 zum Korrigieren der Position und/oder Ausrichtung der Arbeitswerkzeuge 14 abgeleitet werden. Die Datenverarbeitungseinrichtung 106 kann dazu eingerichtet sein, beim Ableiten der Steuerungsvorgaben sowohl die Nutzflächendaten als auch die Pflanzendaten zu berücksichtigen.

Weiterhin können als Kameras ausgebildete Erfassungseinrichtungen 102c zum Ermitteln der Kurvenbahn K eingesetzt werden, welche Bilddaten, insbesondere die Pflanzenreihen P betreffende Bilddaten, erfassen. Die Datenverarbeitungseinrichtung 106 kann dazu eingerichtet sein, die Bilddaten der Kameras auszuwerten, wobei die Datenverarbeitungseinrichtung 106 aus den erfassten Bilddaten der Pflanzenreihen P den Kurvenverlauf der Pflanzenreihen P und somit die Kurvenbahn K des Bewegungspfads B des Arbeitssystems 10 ableiten und folglich Steuerungsvorgaben für die Steuerungseinrichtung 100 ableiten kann.

Außerdem kann die Kurvenbahn K des Bewegungspfads B des Arbeitssystems 10 mit einer als Lenkwinkelsensor ausgebildeten Erfassungseinrichtung 102d ermittelt werden. Der Lenkwinkelsensor kann dabei den Lenkeinschlag von lenkbaren Rädern 24 des Trägerfahrzeugs 20 ermitteln, wobei auf Grundlage des aktuellen Lenkeinschlags der lenkbaren Räder 24 ermittelbar ist, welcher Kurvenbahn K das Arbeitssystem 10 aktuell folgt.

Auf diese Weise wird es durch das Steuern des Verschieberahmens 16 mittels der Steuerungseinrichtung 100 auf Grundlage der ermittelten Kurvenbahn K ermöglicht, dass die Position und/oder Ausrichtung der Arbeitswerkzeuge 14 stets so zuverlässig und präzise erfolgt, dass während eines Bodenbearbeitungs- und/oder Pflanzenpflegevorgangs mittels des Arbeitssystems 10 auch dann eine hohe Arbeitsqualität sichergestellt werden kann und Beschädigungen der Pflanzenreihen P vermieden werden können, wenn das Arbeitssystem 10, beispielsweise im Rahmen einer Kurvenfahrt und/oder im Rahmen eines Wendevorgangs, einer Kurvenbahn K des Bewegungspfads B des Arbeitssystems 10 folgt. Dabei wird die Kurvenbahn K, auf Grundlage derer die Korrektur der Position und/oder Ausrichtung der Arbeitswerkzeuge 14 gesteuert wird, mittels einer oder mehrerer Erfassungseinrichtungen 102a bis 102d und eine Auswertung und Verarbeitung der Sensordaten mittels der Datenverarbeitungseinrichtung 106 ermittelt, sodass die Steuerungseinrichtung 100 auf Grundlage der zuverlässig und präzise ermittelten Kurvenbahn K den Verschieberahmen 16 zum Korrigieren der Position und/oder der Ausrichtung der Arbeitswerkzeuge 14 so steuern kann, dass die Arbeitswerkzeuge 14 auch bei Kurvenfahrten und/oder Wendevorgängen des Arbeitssystems 10 stets in einer beabsichtigten Position angeordnet und/oder in einer beabsichtigten Ausrichtung ausgerichtet sind.

Die mittels des Verschieberahmens 16 auf Grundlage der Kurvenbahn K und mittels der Steuerungseinrichtung 100 gesteuerte korrigierte Stellung der Arbeitswerkzeuge 14 ist in der Fig. 3 dargestellt, wobei die Datenverarbeitungseinrichtung 106 auf Grundlage der Sensordaten der Erfassungseinrichtungen 102a bis 102d die aktuell von dem Arbeitssystem 10 befahrene Kurvenbahn K des Bewegungspfads B ermittelt und entsprechende Steuerungsvorgaben für die Steuerungseinrichtung 100 abgeleitet hat, wobei die Steuerungseinrichtung 100 auf Grundlage der Steuerungsvorgaben den Verschieberahmen 16 in der Verfahrrichtung VR quer zur Längserstreckungsrichtung des Arbeitssystems 10 um den Verfahrweg V in Richtung der Kurvenaußenseite verschoben hat.

Die nicht korrigierte Position der Arbeitswerkzeuge 14 ist durch eine gestrichelt dargestellte schemenhafte Darstellung eines Arbeitswerkzeugs 14 im Kurveninneren angedeutet, sodass der Verfahrweg V, um welchen die Arbeitswerkzeuge 14 mittels des Verschieberahmens 16 verfahren wurden, sichtbar wird. Der Verfahrweg V kann beispielsweise mittels der Datenverarbeitungseinrichtung 106 auf Grundlage der ermittelten Kurvenbahn K ermittelt worden sein, wobei die abgeleiteten Steuerungsvorgaben für die Steuerungseinrichtung 100 den Verfahrweg V betreffen.

### Bezugszeichen

- 10: Arbeitssystem
- 12: Anbaumaschine
- 14: Arbeitswerkzeuge
- 16: Verschieberahmen
- 18: Trägerbalken
- 20: Trägerfahrzeug
- 22: Tragevorrichtung
- 24: lenkbare Räder

- 100: Steuerungseinrichtung
- 102a-102d: Erfassungseinrichtung
- 104: Datenspeicher
- 106: Datenverarbeitungseinrichtung

- B: Bewegungspfad
- FR: Fahrtrichtung
- K: Kurvenbahn
- N: Nutzfläche
- V: Verfahrweg
- VR: Verfahrrichtung
- P: Pflanzenreihen

## Patentansprüche

1. Landwirtschaftliches Arbeitssystem (10) zum Bearbeiten des Bodens und/oder zum Pflegen von Nutzpflanzen auf einer landwirtschaftlichen Nutzfläche (N), insbesondere landwirtschaftliches Hacksystem oder Spritzsystem, mit
- mehreren Arbeitswerkzeugen (14) zum Bearbeiten des Bodens und/oder zum Pflegen von Nutzpflanzen auf der landwirtschaftlichen Nutzfläche (N), und
- einem Verschieberahmen (16), welcher dazu eingerichtet ist, die Arbeitswerkzeuge (14) zum Korrigieren der Position und/oder der Ausrichtung der Arbeitswerkzeuge (14) zu verfahren,
**gekennzeichnet durch** eine elektronische Steuerungseinrichtung (100), welche dazu eingerichtet ist, das Verfahren der Arbeitswerkzeuge (14) zum Korrigieren der Position und/oder der Ausrichtung der Arbeitswerkzeuge (14) mittels des Verschieberahmens (16) auf Grundlage einer ermittelten Kurvenbahn (K) eines Bewegungspfads (B) des Arbeitssystems (10) zu steuern.

2. Landwirtschaftliches Arbeitssystem (10) nach Anspruch 1,
**gekennzeichnet durch** zumindest eine sensorische Erfassungseinrichtung (102a-102d) zum Erfassen von die Kurvenbahn (K) des Bewegungspfads (B) des Arbeitssystems (10) betreffenden Sensordaten, wobei die Steuerungseinrichtung (100) vorzugsweise dazu eingerichtet ist, das Verfahren der Arbeitswerkzeuge (14) zum Korrigieren der Position und/oder der Ausrichtung der Arbeitswerkzeuge (14) mittels des Verschieberahmens (16) auf Grundlage der erfassten Sensordaten zu steuern.

3. Landwirtschaftliches Arbeitssystem (10) nach Anspruch 2,
**dadurch gekennzeichnet, dass** die zumindest eine sensorische Erfassungseinrichtung (102a-102d) als Gyroskop und/oder Beschleunigungssensor zum Erfassen von die Lage und/oder die Ausrichtung und/oder die Rotation und/oder die Beschleunigung des Arbeitssystems (10) betreffenden Sensordaten ausgebildet ist, wobei die Steuerungseinrichtung (100) vorzugsweise dazu eingerichtet ist, das Verfahren der Arbeitswerkzeuge (14) zum Korrigieren der Position und/oder der Ausrichtung der Arbeitswerkzeuge (14) mittels des Verschieberahmens (16) auf Grundlage der Lage und/oder der Ausrichtung und/oder der Rotation und/oder der Beschleunigung des Arbeitssystems (10) zu steuern.

4. Landwirtschaftliches Arbeitssystem (10) nach Anspruch 2 oder 3,
**dadurch gekennzeichnet, dass** die zumindest eine sensorische Erfassungseinrichtung (102a-102d) als GPS-Sensor zum Erfassen von die aktuelle Geo-Position des Arbeitssystems (10) betreffenden Positionsdaten und/oder die aktuelle Bewegung des Arbeitssystems (10) betreffenden Bewegungsdaten ausgebildet ist, wobei die Steuerungseinrichtung (100) vorzugsweise dazu eingerichtet ist, das Verfahren der Arbeitswerkzeuge (14) zum Korrigieren der Position und/oder der Ausrichtung der Arbeitswerkzeuge (14) mittels des Verschieberahmens (16) auf Grundlage der Geo-Position und/oder der Bewegung des Arbeitssystems (10) zu steuern.

5. Landwirtschaftliches Arbeitssystem (10) nach einem der Ansprüche 2 bis 4, **dadurch gekennzeichnet, dass** die zumindest eine sensorische Erfassungseinrichtung (102a-102d) Bestandteil einer Kamera zum Erfassen von die Kurvenbahn (K) des Bewegungspfads (B) des Arbeitssystems (10) betreffenden Bilddaten, insbesondere zur optischen Erfassung der Kurvenbahn (K), ist, wobei die Steuerungseinrichtung (100) vorzugsweise dazu eingerichtet ist, das Verfahren der Arbeitswerkzeuge (14) zum Korrigieren der Position und/oder der Ausrichtung der Arbeitswerkzeuge (14) mittels des Verschieberahmens (16) auf Grundlage der Bilddaten zu steuern.

6. Landwirtschaftliches Arbeitssystem (10) nach einem der Ansprüche 2 bis 5, **dadurch gekennzeichnet, dass** die zumindest eine sensorische Erfassungseinrichtung (102a-102d) als Lenkwinkelsensor zum Erfassen von den Lenkwinkel des Arbeitssystems (10), insbesondere eines Zug- oder Trägerfahrzeugs des Arbeitssystems (10), betreffenden Sensordaten, wobei die Steuerungseinrichtung (100) vorzugsweise dazu eingerichtet ist, das Verfahren der Arbeitswerkzeuge (14) zum Korrigieren der Position und/oder der Ausrichtung der Arbeitswerkzeuge (14) mittels des Verschieberahmens (16) auf Grundlage des Lenkwinkels des Arbeitssystems (10) zu steuern.

7. Landwirtschaftliches Arbeitssystem (10) nach einem der Ansprüche 2 bis 6, **dadurch gekennzeichnet, dass** die zumindest eine sensorische Erfassungseinrichtung (102a-102d) als Deichselwinkelsensor zum Erfassen von den Deichselwinkel an einer Deichsel, insbesondere zwischen einem Zugfahrzeug und einer über die Deichsel mit dem Zugfahrzeug verbundenen Anbaumaschine (12) des Arbeitssystems (10), betreffenden Sensordaten, wobei die Steuerungseinrichtung (100) vorzugsweise dazu eingerichtet ist, das Verfahren der Arbeitswerkzeuge (14) zum Korrigieren der Position und/oder der Ausrichtung der Arbeitswerkzeuge (14) mittels des Verschieberahmens (16) auf Grundlage des Deichselwinkels des Arbeitssystems (10) zu steuern.

8. Landwirtschaftliches Arbeitssystem (10) nach einem der vorstehenden Ansprüche,
**dadurch gekennzeichnet, dass** die elektronische Steuerungseinrichtung (100) dazu eingerichtet ist, das Verfahren der Arbeitswerkzeuge (14) zum Korrigieren der Position und/oder der Ausrichtung der Arbeitswerkzeuge (14) mittels des Verschieberahmens (16) auf Grundlage von die Nutzfläche (N) betreffenden Nutzflächendaten und/oder die auf der Nutzfläche (N) kultivierten Nutzpflanzen betreffenden Pflanzendaten zu steuern.

9. Landwirtschaftliches Arbeitssystem (10) nach Anspruch 8,
**dadurch gekennzeichnet, dass** die
- die Nutzfläche (N) betreffenden Nutzflächendaten Informationen zum Verlauf von Fahrspuren, insbesondere zum Kurvenverlauf von Kurven der Fahrspuren, für das Arbeitssystem (10) auf der Nutzfläche (N) umfassen, und/oder
- die auf der Nutzfläche (N) kultivierten Nutzpflanzen betreffenden Pflanzendaten Informationen zum Verlauf von Pflanzenreihen (P), insbesondere zum Kurvenverlauf von Kurven der Pflanzenreihen (P), auf der Nutzfläche umfassen,
wobei die elektronische Steuerungseinrichtung (100) vorzugsweise dazu eingerichtet ist, das Verfahren der Arbeitswerkzeuge (14) zum Korrigieren der Position und/oder der Ausrichtung der Arbeitswerkzeuge (14) mittels des Verschieberahmens (16) auf Grundlage des Verlaufs der Fahrspuren und/oder des Verlaufs der Pflanzenreihen (P) zu steuern.

10. Landwirtschaftliches Arbeitssystem (10) nach einem der vorstehenden Ansprüche,
**gekennzeichnet durch** eine elektronische Datenverarbeitungseinrichtung (106), welche dazu eingerichtet ist,
- die Kurvenbahn (K), insbesondere den Kurvenverlauf und/oder den Kurvenradius der Kurvenbahn (K), zu ermitteln, und/oder
- Steuerungsvorgaben für die Steuerungseinrichtung (100) zum Steuern des Verfahrens der Arbeitswerkzeuge (14) abzuleiten,
wobei die elektronische Datenverarbeitungseinrichtung (106) vorzugsweise dazu eingerichtet ist,
- die Kurvenbahn (K), insbesondere den Kurvenverlauf und/oder den Kurvenradius der Kurvenbahn (K), auf Grundlage der Sensordaten, Positionsdaten, Bewegungsdaten, Bilddaten, Nutzflächendaten und/oder Pflanzendaten zu ermitteln, und/oder
- die Steuerungsvorgaben auf Grundlage der Sensordaten, Positionsdaten, Bewegungsdaten, Bilddaten, Nutzflächendaten und/oder Pflanzendaten und/oder auf Grundlage der ermittelten Kurvenbahn (K) des Bewegungspfads abzuleiten.

11. Landwirtschaftliches Arbeitssystem (10) nach Anspruch 10,
**dadurch gekennzeichnet, dass** die elektronische Datenverarbeitungseinrichtung (106) dazu eingerichtet ist, die Geo-Position, insbesondere die mittels des GPS-Sensors erfasste Geo-Position, des Arbeitssystems (10) mit
- den die Nutzfläche (N) betreffenden Nutzflächendaten, insbesondere dem Verlauf der Fahrspuren für das Arbeitssystem auf der Nutzfläche (N), und/oder
- den die auf der Nutzfläche (N) kultivierten Nutzpflanzen betreffenden Pflanzendaten, insbesondere dem Verlauf der Pflanzenreihen (P) auf der Nutzfläche (N),
zu vergleichen, wobei die Datenverarbeitungseinrichtung (106) vorzugsweise dazu eingerichtet ist, die Steuerungsvorgaben für die Steuerungseinrichtung (100) auf Grundlage des Vergleichs abzuleiten und/oder wobei die Steuerungseinrichtung (100) vorzugsweise dazu eingerichtet ist, das Verfahren der Arbeitswerkzeuge (14) zum Korrigieren der Position und/oder der Ausrichtung der Arbeitswerkzeuge (14) mittels des Verschieberahmens (16) auf Grundlage des Vergleichs zu steuern.

12. Landwirtschaftliches Arbeitssystem (10) nach einem der vorstehenden Ansprüche,
**dadurch gekennzeichnet, dass** das Korrigieren der Position und/oder der Ausrichtung der Arbeitswerkzeuge (14) das Verändern der Position und/oder der Ausrichtung der Arbeitswerkzeuge (14) in Bezug auf Nutzpflanzen auf der landwirtschaftlichen Nutzfläche (N), insbesondere das Verändern des Abstands der Arbeitswerkzeuge zu Pflanzenreihen (P) auf der landwirtschaftlichen Nutzfläche (N), betrifft.

13. Verfahren zum Einstellen eines landwirtschaftlichen Arbeitssystems (10) zum Bearbeiten des Bodens und/oder zum Pflegen von Nutzpflanzen auf einer landwirtschaftlichen Nutzfläche (N), insbesondere landwirtschaftliches Hacksystem oder Spritzsystem, vorzugsweise eines landwirtschaftlichen Arbeitssystems (10) nach einem der vorstehenden Ansprüche, mit den Schritten:
- Bearbeiten des Bodens und/oder Pflegen von Nutzpflanzen auf der landwirtschaftlichen Nutzfläche (N) mittels mehrerer Arbeitswerkzeuge (14) des Arbeitssystems (10), und
- Verfahren der Arbeitswerkzeuge (14) zum Korrigieren der Position und/oder der Ausrichtung der Arbeitswerkzeuge (14) mittels eines Verschieberahmens (16) des Arbeitssystems (10), **gekennzeichnet durch** den Schritt:
- Steuern des Verfahrens der Arbeitswerkzeuge (14) zum Korrigieren der Position und/oder der Ausrichtung der Arbeitswerkzeuge (14) mittels des Verschieberahmens (16) auf Grundlage einer ermittelten Kurvenbahn (K) eines Bewegungspfads (B) des Arbeitssystems (10) mittels einer elektronischen Steuerungseinrichtung (100).
